# EUROPEAN PATENT SPECIFICATION

(11) **EP 4 054 023 B1**
(45) Date of publication and mention of the grant of the patent: **12.02.2025**
(21) Application number: 22159596.0
(22) Date of filing: 02.03.2022
(51) Int. Cl.: H01R 13/70, H01R 13/627, B60L 53/16

(54) **CHARGING GUN**
LADEPISTOLE
PISTOLET DE CHARGE

(30) Priority: 03.03.2021 CN 202110236084
(43) Date of publication of application: 07.09.2022
(73) Proprietor: Nio Technology (Anhui) Co., Ltd, Hefei City, Anhui 230601 (CN)
(72) Inventor: XIA, Lijian, AnTing Town, Jiading Shanghai (CN); ZHAO, Haibin, AnTing Town, Jiading Shanghai (CN)
(74) Representative: Patentwerk B.V.

(56) References cited:
- CN-A- 108 657 005
- CN-U- 208 706 998

## Description

### Technical Field

The invention relates to the technical field of electric vehicles, and in particular, to a charging gun.

### Background Art

As an indispensable part of people's work and life, vehicles were once hailed as machines that change the world. However, the vehicles cause environmental pollution, energy security problem and other problems while enabling us to travel conveniently and fast. Therefore, energy conservation and emission reduction has become one of primary tasks in current vehicle technology development. Under this background, electric vehicles, as important products in energy conservation and emission reduction, and new energy development, are gradually replacing conventional power vehicles, and lead the whole vehicle industry to a new development direction. As users continuously recognize electric vehicles, demands for electric vehicles are also increasing, so that requirements on charging guns for electric vehicles on the market become increasingly higher.

Existing charging guns have certain differences in appearance and definitions of various parts. A gun head is used as an example. In the prior art, the invention with the patent number of CN 208706998 U, which discloses the preamble of independent claim 1, is directed to a technical solution in which a gun head of a charging gun is provided with a charging plug, the gun head of the charging gun is internally further provided with a microswitch mounting base, and the microswitch mounting base is provided with a microswitch, that is, the microswitch is disposed in a cavity connected to the charging plug. In the invention, the gun head is the charging plug and does not contain the cavity connected to the charging plug. Chinese publications CN108657005A discloses another type of charging gun which include a gun body and a gun head fixed to the gun body and having a microswitch on it.

At present, the charging gun product has a relatively simple function, which limits the development of electric vehicle technology to some extent, and a charging technology is a major bottleneck in the development. Due to different charging standard systems in various countries, communication modes and charging interfaces of different standard systems are different. The charging guns on the current market are mainly designed separately according to requirements of charging standard systems in various countries. In fact, charging guns of different standards have similarities and differences in a design process. For example, a charging gun in a Chinese standard and a charging gun in a European standard have the following common point: the number of pins is the same as the number of insertion holes. The differences are as follows: the charging gun in the Chinese standard triggers the microswitch for signal feedback in an insertion process, while the charging gun in the European standard does not require signal feedback. At present, the microswitch of the charging gun in the Chinese standard on the market is usually installed below a charging button. When the charging gun in the Chinese standard is inserted, the microswitch is triggered to generate linkage, thereby generating a feedback signal. However, this kind of charging gun structure needs to be separately researched and developed depending on different market requirements, which greatly increases product research and development and manufacturing costs of the charging gun.

Accordingly, a novel charging gun is required in this field. On the basis of meeting market charging standards of the Chinese standard and the European standard, parts of charging guns in different standards are reused to the greatest extent, and product research and development and manufacturing costs of the charging guns are effectively reduced.

### Summary of the invention

To solve the foregoing problems in the prior art, that is, to solve the problems that existing charging guns have a single function and high product research and development and manufacturing costs, the invention provides a charging gun as set out in the appended set of claims.

It may be understood by those skilled in the art that, in the technical solution of the invention, a charging gun is provided which comprises a gun head, a microswitch, and a gun body assembly, wherein the microswitch is disposed on the gun head, and the gun body assembly is detachably connected to the gun head.

Through the foregoing arrangement, in the charging gun of the invention, parts of a charging gun in a Chinese standard and a charging gun in a European standard are reused to the greatest extent, and research and development and production costs of the charging gun are reduced.

It may be understood by those skilled in the art that, charging guns on the current market are mainly designed separately according to requirements of charging standard systems in various countries, so that communication modes and charging interfaces of different standard systems are different. In fact, research shows that charging guns in different charging standards also have certain similarities. If charging guns can be designed reasonably to better utilize the similarities of different charging guns, related parts of different charging guns can be reused to the greatest extent, so as to achieve the purpose of reducing costs. For example, in charging standards of a Chinese standard and a European standard, the number of pins of a charging gun is the same as the number of insertion holes. However, the charging gun in the Chinese standard triggers the microswitch for signal feedback in an insertion process, while the charging gun in the European standard does not require signal feedback. At present, the microswitch of the charging gun in the Chinese standard on the market is usually installed below a charging button. When the charging gun in the Chinese standard is inserted, the microswitch is triggered to generate linkage, thereby generating a feedback signal. Therefore, in a preferred technical solution of the invention, the charging gun comprises a gun head, a microswitch, and a gun body assembly, wherein the gun head is a charging plug, the microswitch is disposed on the gun head, the microswitch is separated from the gun body assembly, and the gun body assembly is detachably connected to the gun head, thereby facilitating reuse of gun body assemblies of different charging guns. The gun head is a male gun head or a female gun head. The gun head may be a gun head in a Chinese standard or a gun head in a European standard as required. The microswitch is integrated, a resistor is integrated inside the microswitch, and the microswitch is connected to the gun head in a glue pouring manner. The microswitch and an installation method thereof are more reliable. The gun body assembly comprises a gun cover assembly, a gun body, a sealing ring, a tail cover and a cable, wherein the gun cover assembly is detachably connected to the gun body, the cable is sleeved with the sealing ring, and the cable is connected to the gun body through the tail cover. The gun cover assembly comprises a gun cover body and a clamping hook button, one end of the clamping hook button is provided with a clamping hook, the other end thereof is provided with a button, a rotating shaft is further disposed at a middle position between the clamping hook and the button, the clamping hook button is pivotally connected to the gun body through the rotating shaft, a compression assembly is further disposed between the button and the gun body, and the gun cover body covers the clamping hook button and is detachably connected to the gun body. The solution can implement reuse of parts of a charging gun in a Chinese standard and a charging gun in a European standard to the greatest extent, and the charging gun in the Chinese standard and the charging gun in the European standard can switch between each other only by replacing the gun head, the gun cover body, and the clamping hook button. Compared with the separate design of the charging gun in the Chinese standard and the charging gun in the European standard, the reuse of parts in this solution can reduce a huge mold cost and effectively reduce research and development and manufacturing costs of the charging gun, and the charging gun is simple in overall design and convenient to assembly.

### Brief Description of the Drawings

A charging gun of the invention is described below with reference to drawings. In the drawings:
Fig. 1 is a schematic diagram of a charging gun in a Chinese standard provided in an embodiment of the invention;
Fig. 2 is a schematic diagram of a charging gun in a European standard provided in an embodiment of the invention;
Fig. 3 is an exploded schematic diagram of Fig. 1;
Fig. 4 is an exploded schematic diagram of Fig. 2;
Fig. 5 is a schematic diagram of a gun body in a charging gun provided in an embodiment of the invention.

### List of reference numerals:

1 - Gun head, 2 - Microswitch, 3 - Gun body assembly, 31 - Gun cover assembly, 311 - Gun cover body, 312 - Clamping hook button, 3121 - Clamping hook, 3122 - Button, 3123 - Rotating shaft, 32 - Gun body, 33 - Sealing ring, 34 - Tail cover, 35 - Cable.

### Detailed Description of Embodiments

Preferred implementations of the invention are described below with reference to the drawings. It should be understood by those skilled in the art that these implementations are only for explaining the technical principles of the invention and are not intended to limit the scope of protection of the invention. Those skilled in the art can make adjustments according to requirements so as to adapt to specific application scenarios. For example, although the description is made with a charging gun as an example, various other charging structures may be obviously adopted in the invention, provided that the charging structure has a charging effect.

It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, may mean a fixed connection, a detachable connection or an integrated connection; may mean a mechanical connection or an electrical connection; and may mean a direct connection, an indirect connection by means of an intermediary, or internal communication between two elements. For those skilled in the art, the specific meaning of the above-mentioned terms in the invention can be interpreted according to the specific situation.

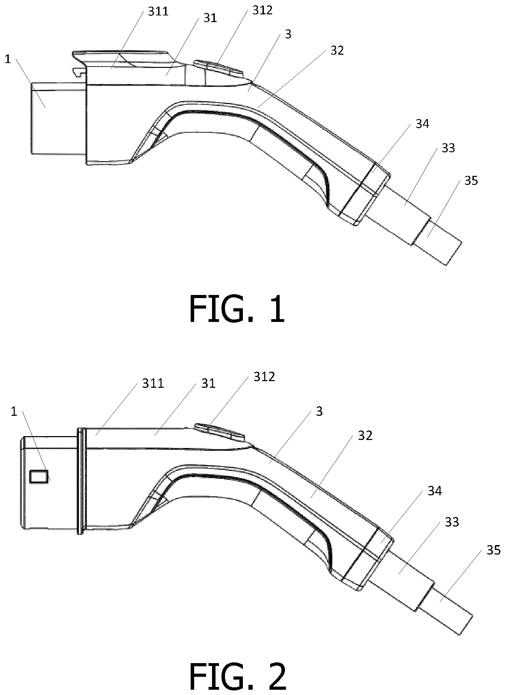

A charging gun of the invention is first described with reference to Fig. 1 and Fig. 2. Fig. 1 is a schematic diagram of a charging gun in a Chinese standard provided in an embodiment of the invention, and Fig. 2 is a schematic diagram of a charging gun in a European standard provided in the invention.

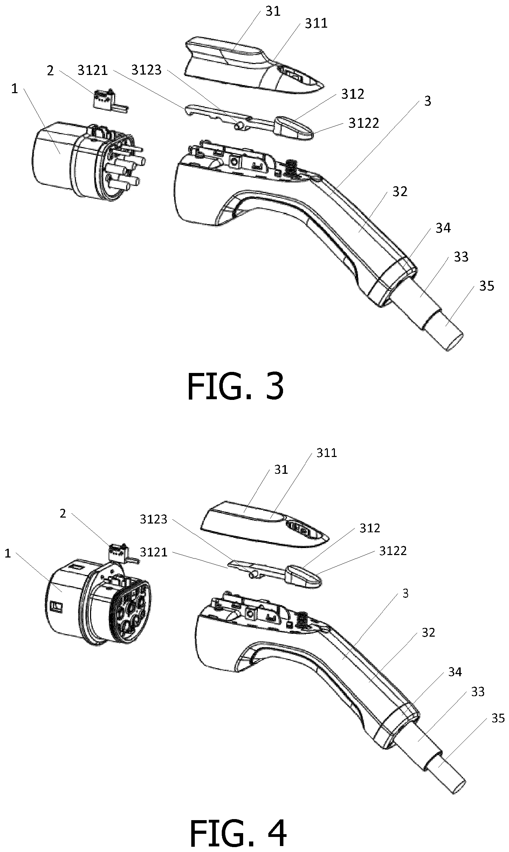

As shown in Fig. 1 and Fig. 2, to solve the problems that existing charging guns in various charging standards have a single function, cannot be reused, and have high research and development and manufacturing costs, the charging gun of the invention comprises a gun head 1, a microswitch 2 and a gun body assembly 3, wherein the microswitch 2 is disposed on the gun head 1, and the gun body assembly 3 is detachably connected to the gun head 1. Fig. 3 is an exploded schematic diagram of Fig. 1, and Fig. 4 is an exploded schematic diagram of Fig. 2.

As shown in Fig. 3 and Fig. 4, the gun head 1 is a male gun head or a female gun head.

The foregoing arrangement has the following advantages: the microswitch 2 is disposed on the gun head 1, and is separated from the gun body assembly 3, and the gun body assembly 3 is detachably connected to the gun head 1, so that the gun body assemblies 3 of two kinds of charging guns can be reused, and the gun head 1 is replaced according to specific requirements to switch between the charging gun in the Chinese standard and the charging gun in the European standard.

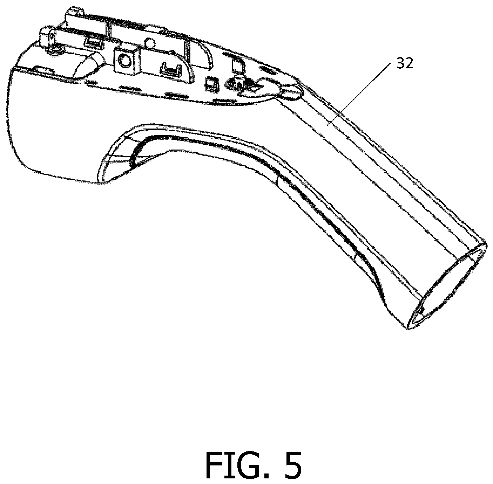

The charging gun of the invention is further described in detail below with reference to Fig. 3 to Fig. 5.

As shown in Fig. 3, in a possible implementation, the microswitch 2 is integrated, and a resistor is integrated inside the microswitch 2.

The foregoing arrangement has the following advantages: the integrated microswitch is used, and the resistor is integrated inside the microswitch 2, so that the structure is simpler, and the wiring connection between the microswitch 2 and the resistor is reduced.

As shown in Fig. 3, in a possible implementation, the microswitch 2 is connected to the gun head 1 in a glue pouring manner.

The foregoing arrangement has the following advantages: the microswitch 2 is fixed to the gun head 1 in a glue pouring manner, so that reliability is higher, and water prevention of the microswitch 2 can also be implemented.

As shown in Fig. 3, in a possible implementation, the gun body assembly 3 comprises a gun cover assembly 31, a gun body 32, a sealing ring 33, a tail cover 34, and a cable 35, wherein the gun cover assembly 31 is detachably connected to the gun body 32, the cable 35 is sleeved with the sealing ring 33, and the cable 35 is connected to the gun body 32 through the tail cover 34.

The foregoing arrangement has the following advantages: the gun body 32 is detachably connected to the gun cover assembly 31 so as to further separate the gun body, thereby facilitating reuse of gun bodies of the charging gun in the Chinese standard and the charging gun in the European standard.

As shown in Fig. 3, in a possible implementation, the gun cover assembly 31 comprises a gun cover body 311 and a clamping hook button 312, one end of the clamping hook button 312 is provided with a clamping hook 3121, the other end thereof is provided with a button 3122, the clamping hook 3121 is connected to the microswitch 2, a rotating shaft 3123 is further disposed at a middle position between the clamping hook 3121 and the button 3122, the clamping hook button 312 is pivotally connected to the gun body 32 through the rotating shaft 3123, a compression assembly is further disposed between the button 3122 and the gun body 32, and the gun cover body 311 covers the clamping hook button 312 and is detachably connected to the gun body 32.

The foregoing arrangement has the following advantages: the gun cover assembly 31 is provided with the clamping hook button 312, and the clamping hook 3121 of the clamping hook button 312 is connected to the microswitch 2, so that when the button 3122 is pressed, the clamping hook 3121 triggers the microswitch 2 to implement linkage between the button 3122 and the microswitch 2 and to generate a feedback signal.

As shown in Fig. 3, in a possible implementation, the compression assembly is a spring, or may certainly be a plate spring or the like.

The foregoing arrangement has the following advantages: the spring is combined with the rotating shaft 3123 to effectively implement the linkage between the clamping hook button 312 and the microswitch 2.

As shown in Fig. 3, in a possible implementation, the clamping hook button 312 is provided with a mounting hole, and the spring is connected to the clamping hook button 312 through the mounting hole.

The foregoing arrangement has the following advantages: the spring is mounted through the mounting hole, and the reliability is higher.

As shown in Fig. 3, in a possible implementation, the gun head 1 is connected to the gun body 32 through a screw.

The foregoing arrangement has the following advantages: an effective connection between the gun head 1 and the gun body 32 can be ensured.

As shown in Fig. 3, in a possible implementation, the gun cover body 311 is provided with a reinforcing rib.

The foregoing arrangement has the following advantages: the reinforcing rib on the gun cover body 311 can limit the movement of the rotating shaft 3123.

As shown in Fig. 4, one possible implementation of the invention is described using a charging gun in a European standard as an example. A microswitch 2 is mounted in a gun head 1 first, the microswitch 2 is fixed in a glue pouring manner, and a resistor with a corresponding resistance value is integrated in the microswitch 2. Each terminal of the gun head 1 is in pressing rivet connection with a cable 35, and the gun head 1 is mounted in a gun body 32, and is fixedly connected to the gun body 32 through three M5 screws. A clamping hook button 312 is fixed to the gun body 32 through a rotating shaft 3123, one end of a spring is mounted on the gun body 32, and the other end thereof is mounted in a hole of the clamping hook button 312. Therefore, the clamping hook button 312, the microswitch 2, the rotating shaft 3123, and the spring form a signal triggering circuit. When the button 3122 is pressed down, the charging gun sends a signal to a whole pile. A gun cover body 311 is mounted on the gun body 32, and the gun body 32 is provided with a guide groove to ensure accurate positioning when the gun cover body 311 is mounted in. A selected sealing ring 33 is a plastic part of a metal insert, and is placed between the gun body and a tail cover 34 through the cable 35, and the tail cover 34 is fixedly connected to the gun body 32 through five M4 screws.

The foregoing arrangement has the following advantages: the microswitch 2 is mounted on the gun head 1, the charging gun in the Chinese standard and the charging gun in the European standard can switch between each other only by replacing the gun head 1, the gun cover body 311 and the clamping hook button 312, the operation is simple, and research and development and manufacturing costs can be effectively reduced.

In particular, the gun cover body 311 is fixed to the gun body 32 through a reverse buckle on the gun body 32, the spring is mounted on the gun body 32 and is positioned below the clamping hook button 312, the sealing ring 33 is a plastic part of a metal insert and is placed between the gun body 32 and the tail cover 34 to implement sealing and fixing of the cable 35, and the tail cover 34 is fixedly connected to the gun body 32 through four M4 screws.

In conclusion, in the charging gun of the invention, the microswitch 2 is disposed on the gun head 1, and the gun head 1 may be a male gun head or a female gun head. Linkage is generated through the clamping hook button 312 and the microswitch 2 to generate a feedback signal, so that gun bodies of a charging gun in a Chinese standard and a charging gun in a European standard are reused. The charging gun in the Chinese standard and the charging gun in the European standard can switch between each other only by replacing the gun head 1, the gun cover body 311 and the clamping hook button 312, so that main molds of the charging gun in the Chinese standard and the charging gun in the European standard are reused, and research and development and manufacturing costs are effectively reduced. In addition, the charging gun is simple in overall structure and convenient to assemble.

In another alternative implementation, the gun head 1 may be a male gun head or a female gun head, or may be a gun head with an adaptor, provided that an effective connection can be implemented.

In an alternative implementation, the microswitch 2 may be integrated or detachably assembled, or may be connected through a wire, provided that linkage is generated between the microswitch and the clamping hook button 312 to generate a feedback signal. In another alternative implementation, the microswitch 2 may be fixed in a glue pouring manner, or in a press connection manner, or in a welding manner, provided that the microswitch 2 can be effectively fixed. In another alternative implementation, the gun head 1 and the gun body 32 may be connected by a screw, or may be clamped by a reverse buckle, or may be in press connection or welded, provided that the gun head 1 and the gun body 32 are effectively connected.

## Claims

1. A charging gun, comprising a gun head (1), a microswitch (2), and a gun body assembly (3),
wherein the gun body assembly (3) comprises a gun cover assembly (31), a gun body (32), a sealing ring (33), a tail cover (34) and a cable (35), the gun cover assembly (31) is detachably connected to the gun body (32), the cable (35) is sleeved with the sealing ring (33), and the cable (35) is connected to the gun body (32) through the tail cover (34);
wherein the gun head (1) is connected to the gun body (32) by a screw or clamped to the gun body (32) by a reverse buckle; and
wherein the gun cover assembly (31) comprises a gun cover body (311) and a clamping hook button (312),
**characterized in that**:
the microswitch (2) is disposed on the gun head (1), one end of the clamping hook button (312) is provided with a clamping hook (3121), the other end thereof is provided with a button (3122), the clamping hook (3121) is connected to the microswitch (2), a rotating shaft (3123) is further disposed at a middle position between the clamping hook (3121) and the button (3122), the clamping hook button (312) is pivotally connected to the gun body (32) through the rotating shaft (3123), a compression assembly is further disposed between the button (3122) and the gun body (32), and the gun cover body (311) covers the clamping hook button (312) and is detachably connected to the gun body (32); and
the gun head (1), the gun cover body (311) and the clamping hook button (312) are replaceable.

2. The charging gun according to claim 1, wherein the gun head (1) is a male gun head or a female gun head.

3. The charging gun according to claim 1, wherein the microswitch is integrated, and a resistor is integrated inside the microswitch (2).

4. The charging gun according to claim 1, wherein the microswitch (2) is connected to the gun head (1) in a glue pouring manner.

5. The charging gun according to claim 1, wherein the compression assembly is a spring.

6. The charging gun according to claim 5, wherein the clamping hook button is provided with a mounting hole, and the spring is connected to the clamping hook button through the mounting hole.

7. The charging gun according to claim 1, wherein the gun cover body (311) is provided with a reinforcing rib.

## Patentansprüche

1. Ladepistole, umfassend einen Pistolenkopf (1), einen Mikroschalter (2) und eine Pistolenkörperanordnung (3),
wobei die Pistolenkörperanordnung (3) eine Pistolenverkleidungsanordnung (31), einen Pistolenkörper (32), einen Dichtungsring (33), eine Schlussabdeckung (34) und ein Kabel (35) umfasst, wobei die Pistolenverkleidungsanordnung (31) lösbar mit dem Pistolenkörper (32) verbunden ist, wobei das Kabel (35) mit dem Dichtungsring (33) eingefasst ist und wobei das Kabel (35) mit dem Pistolenkörper (32) über die Schlussabdeckung (34) verbunden ist;
wobei der Pistolenkopf (1) mit dem Pistolenkörper (32) über eine Schraube verbunden ist oder über eine Umkehrschnalle am Pistolenkörper (32) angeklemmt ist; und
wobei die Pistolenverkleidungsanordnung (31) einen Pistolenverkleidungskörper (311) und einen Klemmhakenknopf (312) umfasst,
**dadurch gekennzeichnet, dass**:
der Mikroschalter (2) am Pistolenkopf (1) angeordnet ist, ein Ende des Klemmhakenknopfs (312) mit einem Klemmhaken (3121) versehen ist, das andere Ende davon mit einem Druckknopf (3122) versehen ist, der Klemmhaken (3121) mit dem Mikroschalter (2) verbunden ist, eine rotierende Welle (3123) ferner an einer mittleren Position zwischen dem Klemmhaken (3121) und dem Druckknopf (3122) angeordnet ist, der Klemmhakenknopf (312) über die rotierende Welle (3123) schwenkbar mit dem Pistolenkörper (32) verbunden ist, eine Kompressionsanordnung ferner zwischen dem Druckknopf (3122) und dem Pistolenkörper (32) angeordnet ist und der Pistolenverkleidungskörper (311) den Klemmhakenknopf (312) bedeckt und lösbar mit dem Pistolenkörper (32) verbunden ist; und
der Pistolenkopf (1), der Pistolenverkleidungskörper (311) und der Klemmhakenknopf (312) ersetzbar sind.

2. Ladepistole nach Anspruch 1, wobei der Pistolenkopf (1) ein Steckerpistolenkopf oder ein Buchsenpistolenkopf ist.

3. Ladepistole nach Anspruch 1, wobei der Mikroschalter integriert ist und ein Widerstand im Mikroschalter (2) integriert ist.

4. Ladepistole nach Anspruch 1, wobei der Mikroschalter (2) in einer Klebstoff gießenden Weise mit dem Pistolenkopf (1) verbunden ist.

5. Ladepistole nach Anspruch 1, wobei die Kompressionsanordnung eine Feder ist.

6. Ladepistole nach Anspruch 5, wobei der Klemmhakenknopf mit einem Montageloch versehen ist und die Feder über das Montageloch mit dem Klemmhakenknopf verbunden ist.

7. Ladepistole nach Anspruch 1, wobei der Pistolenverkleidungskörper (311) mit einer Verstärkungsrippe versehen ist.

## Revendications

1. Pistolet de charge, comprenant un tête de pistolet (1), un microrupteur (2), et un ensemble de corps de pistolet (3),
dans lequel l'ensemble de corps de pistolet (3) comprend un ensemble de couvercle de pistolet (31), un corps de pistolet (32), une bague d'étanchéité (33), un couvercle arrière (34) et un câble (35), l'ensemble de couvercle de pistolet (31) est relié de façon amovible au corps de pistolet (32), le câble (35) est garni avec la bague d'étanchéité (33), et le câble (35) est relié au corps de pistolet (32) par l'intermédiaire du couvercle arrière (34) ;
dans lequel la tête de pistolet (1) est reliée au corps de pistolet (32) par une vis ou serrée sur le corps de pistolet (32) par une boucle inverse ; et
dans lequel l'ensemble de couvercle de pistolet (31) comprend un corps de couvercle de pistolet (311) et un bouton de crochet de serrage (312),
**caractérisé en ce que** :
le microrupteur (2) est disposé sur la tête de pistolet (1), une extrémité du bouton de crochet de serrage (312) est pourvue d'un crochet de serrage (3121), l'autre extrémité de celui-ci est pourvue d'un bouton (3122), le crochet de serrage (3121) est relié au microrupteur (2), un arbre rotatif (3123) est en outre disposé à une position médiane entre le crochet de serrage (3121) et le bouton (3122), le bouton de crochet de serrage (312) est relié de façon pivotante au corps de pistolet (32) par l'intermédiaire de l'arbre rotatif (3123), un ensemble de compression est en outre disposé entre le bouton (3122) et le corps de pistolet (32), et le corps de couvercle de pistolet (311) couvre le bouton de crochet de serrage (312) et est relié de façon amovible au corps de pistolet (32) ; et la tête de pistolet (1), le corps de couvercle de pistolet (311), et le bouton de crochet de serrage (312) sont remplaçables.

2. Pistolet de charge selon la revendication 1, dans lequel la tête de pistolet (1) est une tête de pistolet mâle ou une tête de pistolet femelle.

3. Pistolet de charge selon la revendication 1, dans lequel le microrupteur est intégré, et une résistance est intégrée à l'intérieur du microrupteur (2).

4. Pistolet de charge selon la revendication 1, dans lequel le microrupteur (2) est relié à la tête de pistolet (1) en versant de la colle.

5. Pistolet de charge selon la revendication 1, dans lequel l'ensemble de compression est un ressort.

6. Pistolet de charge selon la revendication 5, dans lequel le bouton de crochet de serrage est pourvu d'un trou de montage, et le ressort est relié au bouton de crochet de serrage par l'intermédiaire du trou de montage.

7. Pistolet de charge selon la revendication 1, dans lequel le corps de couvercle de pistolet (311) est pourvu d'une nervure de renfort.
